# EUROPEAN PATENT APPLICATION

(11) **EP 1 783 796 A2**
(43) Date of publication of application: **09.05.2007**
(21) Application number: 06460037.2
(22) Date of filing: 31.10.2006
(51) Int. Cl.: H01H 35/18, H01H 35/32, H01F 27/40

(54) **Control sensor for devices filled with dielectric liquid, especially transformers**

(30) Priority: 07.11.2005 PL 37797205
(71) Applicant: ABB Sp.zo.o., 04-713 Warszawa (PL)
(72) Inventor: Ciesielski, Slawomir, 95-100 Zgierz (PL)
(74) Representative: Chochorowska-Winiarska, Krystyna

(57) **Abstract**

The control sensor is equipped with a metal sleeve (4) that can slide in relation to the sleeve (1) loosely connected to the pressure control module (2) preferably being an elastic bellows equipped with a mandrel (9) placed in the opening (5) in the metal sleeve (4). Inside the sleeve (1) there are contacts (6), which cooperating with the metal sleeve (4) or with a float (7), constitute a common output for the electric signal. The contacts (6) are introduced in the electric circuit of the transformer (T). The electric signal originating from the control sensor is a signal of liquid pressure control or liquid level control, causing start of the disconnector (R). The sensor described in the invention combines the function of oil pressure and oil level control and is connected with the circuit of electric overcharge control realizing the integrated system of transformer's operation protection.

## Description

Subject of the invention is a control sensor for devices filled with dielectric liquid, for control of pressure and liquid level, designed especially for protection of energy transformer operation. Its task is to control over- and under-filling with oil and starting the disconnector controlling safe operation.

To ensure proper and safe exploitation of a transformer it is necessary to install some devices protecting against excessive pressure and drop of oil level in a tank, and against excessive electric overload. In previous protecting systems the functions were realized by pressure sensors and liquid level sensors installed in a disconnector along with three fuses, one for each phase of the transformer. Each of those three protections could independently start the disconnector, switching the transformer off. If the predefined value is exceeded, the mechanical signal from the pressure sensor or from the liquid level sensor is transmitted directly to the disconnector. Transformation of deformation of the elastic element - bellows or location of a float - into a mechanical signal, and then into a power or location signal influencing the disconnector extends the transmission route and zone of inertia of the sensor. Transmission of mechanical signal impulses is frequently unreliable, and this - combined with large inertia of sensors - makes proper control of the necessary parameters difficult.

There are some pressure sensors known, in which the tested medium influences a membrane or a bellows. Membrane or bellows deformation are then transformed into mechanical or electric values, reflecting the medium pressure. The patent description PL no. 144414 mentions a complex device with electric input for signalization of pressure changes, not designed for installation in the transformer safety system.

Known solutions for control and signalization of liquid level use conductometric probes, floating relays and analogue systems with bellows and membrane sensors. Change in liquid level moves a float. Float's linear movement becomes translated into electric impulses transmitted to the control and measuring equipment. The a/m solutions have mechanical or electric systems composed of a large number of elements, causing their damages during usage. Moreover, they are expensive and require a separate power supply, or connection to the equipment located outside the transformer.
According to the invention, the control sensor for devices filled with dielectric liquid, especially for transformers, comprising a float inside a sleeve and transmitting elements, is characterised in that it is equipped with a metal small sleeve that can slide in relation to the sleeve. The metal small sleeve is loosely connected with a pressure control module, preferably being an elastic bellows with a mandrel constituting its end, located in an opening of the metal small sleeve. In the sleeve, below the metal small sleeve, there are contacts constituting the transmission elements. The contacts, cooperating with the metal sleeve or with a float fitted with a conductive ring, constitute a common output for electric signal. The electric signal originating from the control sensor is a signal for liquid pressure control or a signal of liquid level.

It is preferably when the sleeve and pressure control module in form of an elastic bellows are assembled on the same support, and contacts are connected directly to the electric circuit controlling the transformer. This system contains fuses controlling the disconnector.

Each short-circuit of the contacts in the sensor causes - according to the invention - production of an electric impulse that can be transmitted to the input of a converter or to an other device processing those entering impulses in the systems of limit values of pressure and oil level in tank of the transformer.

The sensor according to the invention cooperates with a transformer control system including fuses controlling the disconnector. Exceeding the preset parameters of oil level or oil pressure results in sending an electric impulse by a sensor. The impulse causes short-circuit of the fuses, which results in turning the transformer off by the disconnector.

Introduction of a sensor responsible for controlling oil pressure and level into the electric circuit including fuses constituting a necessary element of control of transformer overload provides an additional function of starting the disconnector in case the limit values of oil pressure or level become exceeded. Construction and assembly of the resulting protection system composed of a control sensor is much more simple, lowering economic costs of transformers operation.

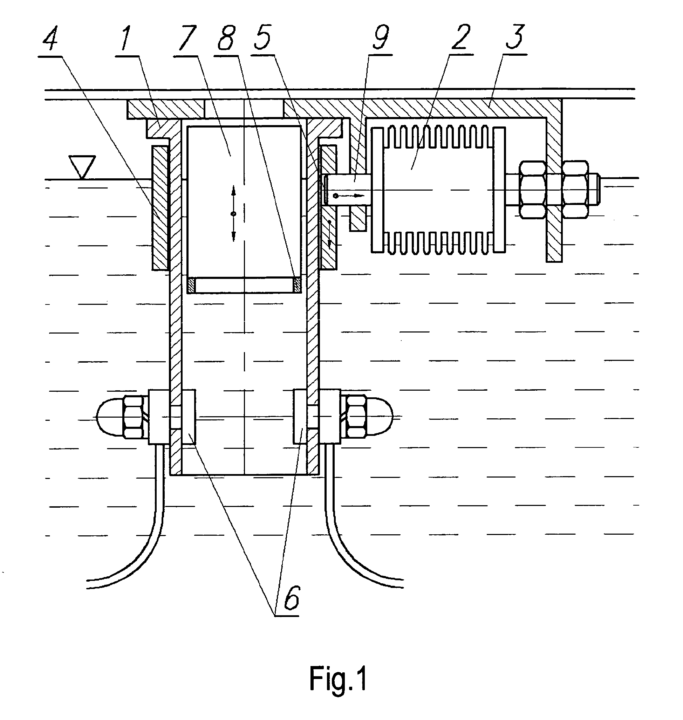

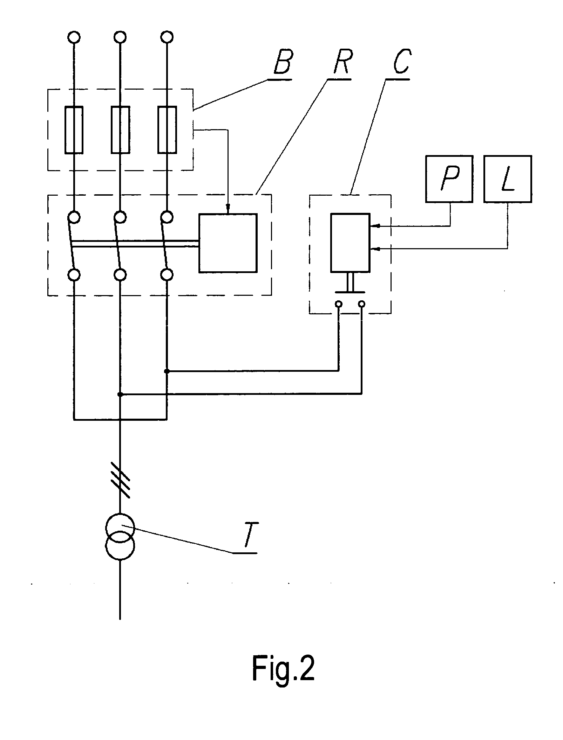

The sensor according to the invention is presented in drawing where the fig. 1 shows the sensor in a cross-section view and fig. 2 - system diagram with a sensor of liquid level and pressure.

According to the invention, sensor C is made of a sleeve 1 and a pressure control module in form of an elastic bellows 2, assembled on the same support 3. The sleeve 1 is equipped with a metal small sleeve 4 which can slide in relation to the sleeve 1, loosely connected with the elastic bellows 2 of the pressure control module. Contacts 6 play the role of transmission elements. They are located inside the sleeve 1, below the metal small sleeve 4. Inside the sleeve 1 there is a float 7 with a metal ring 8. The elastic bellows 2 is equipped with a mandrel 9, placed in a side opening 5 and keeping the metal small sleeve 4 in the upper position of the sleeve 1. Contacts 6 are connected in an electric circuit of the transformer controlling system T, composed of fuses B controlling the disconnector R.

Depending on the existing liquid level L or pressure P the contacts 6 are connected either with the metal sleeve 4 or with the ring 8 of the float 7 and produce an electric impulse transmitted as an input signal from the sensor C to the control system.

In case the oil level in the tansk drops below the admissible value L in the transformer tank T, the float 7 with the ring 8 causes short-circuit of the contacts 6, resulting in production of an electric signal by the sensor C. The signal triggers fuses B starting the disconnector R, turning the transformer T off.

Increase of oil pressure P in the transformer tank T over the admissible value causes that the elastic bellows 2 changes its dimensions causing the mandrel 9 sliding through the opening 5 and releasing the metal sleeve 4. The sleeve 4, causing short-circuit of the contacts 6 makes sensor C to produce an electric signal. The signal triggers fuses B starting the disconnector R, which in turn turns the transformer T off.

Combination of the oil pressure and level control realized by the sensor produced according to the invention, and its introduction into the system of electric overcharge control, constitutes an integrated transformer protection system.

## Claims

1. A control sensor for devices filled with a dielectric liquid, especially for transformers, comprising a float inside a sleeve and transmission elements, **characterised in that** it has a metal sleeve (4) sliding in relation to the sleeve (1), which is loosely connected with a pressure control module (2) preferably being an elastic bellows which is equipped with a mandrel (9) located in an opening (5) of the metal sleeve (4), and the transmission elements are contacts (6) which are located inside the sleeve (1) below the sleeve (4), and the contacts (6) cooperating with the metal sleeve (4) or with a float (7) equipped with a conductive ring (8) constitute a common output for an electric signal.

2. Sensor according to claim 1, **characterised in that** the sleeve (1) and the pressure control module (2), being an elastic bellows, are assembled on the same support (3).

3. Sensor according to claim 1, **characterised in that** contacts (6) are connected with an electric system of the transformer (T) which includes fuses (B) controlling the disconnector (R).
